Europäisches Patentamt

**European Patent Office**

Office européen des brevets

(19)

(11) Veröffentlichungsnummer: **0 025 197**
**B1**

(12) ## EUROPÄISCHE PATENTSCHRIFT

(45) Veröffentlichungstag der Patentschrift:
**23.03.83**

(51) Int. Cl.³: **E 06 B 9/24,** E 06 B 9/386,
E 06 B 9/262, B 32 B 15/08

(21) Anmeldenummer: **80105147.5**

(22) Anmeldetag: **29.08.80**

(54) **Fensterabdeckung.**

(30) Priorität: **08.09.79 DE 7925505 U**
**07.03.80 DE 3008850**

(43) Veröffentlichungstag der Anmeldung:
**18.03.81 Patentblatt 81/11**

(45) Bekanntmachung des Hinweises auf die Patenterteilung:
**23.03.83 Patentblatt 83/12**

(84) Benannte Vertragsstaaten:
**AT BE CH DE FR GB IT LI LU NL SE**

(56) Entgegenhaltungen:
**CH-A-516 053**
**DE-A-1 509 542**
**DE-A-2 019 487**
**DE-A-2 841 966**
**GB-A-766 853**
**GB-A-915 518**
**US-A-3 138 517**

(73) Patentinhaber: **Pusch, Günter, Dr.-Ing., Bannholzweg 12,
D-6903 Neckargemünd (DE)**

(72) Erfinder: **Pusch, Günter, Dr.-Ing., Bannholzweg 12,
D-6903 Neckargemünd 2 (DE)**
Erfinder: **Aisslinger, Dieter E., Heidestrasse 54,
D-6222 Geisenheim (DE)**
Erfinder: **Hoffmann, Alexander, Dipl.-Phys.,
Heidelbergerstrasse 24, D-6901 Mauer (DE)**
Erfinder: **Pusch, Klaus Werner, Bannholzweg 12,
D-6903 Neckargemünd 2 (DE)**

(74) Vertreter: **Paul, Dieter-Alfred, Dipl.-Ing., Erftstrasse 82,
D-4040 Neuss 1 (DE)**

Fensterabdeckung

Die Erfindung betrifft eine Fensterabdeckung, wie Rollo, Jalousie oder dergleichen, aus einem bahnförmigen Material, das aus einer beschichteten, aus Fasern, Folien oder dergleichen bestehenden, lediglich eine mechanische, keine thermisch isolierende Funktion aufweisenden Trägerschicht gefertigt ist, wobei auf zumindest einer der Seiten der Trägerschicht eine IR-reflektierende Reflexschicht aus Metall und darauf eine IR-durchlässige Schutzschicht aus einem Kunststoff, beispielsweise Polyäthylen oder dergleichen, angeordnet und die Schutzschicht(en) so dünn ausgebildet ist bzw. sind, daß ihre thermische Absorption möglichst gering ist.

Eine derartige Fensterabdeckung ist in der GB-A-915 518 beschrieben. Die Fensterabdeckung hat eine Trägerschicht, auf die eine Aluminiumschicht aufgedampft ist. Auf diese Schicht ist eine dünne Schutzschicht, beispielsweise aus Polyäthylen aufgetragen, die für thermische IR-Strahlung im wesentlichen durchlässig ist. Sie ist so dünn ausgebildet, daß ihre thermische Absorption möglichst gering ist. Aufgrund dieser Ausbildung wird die IR-Strahlung an der jeweiligen Aluminiumschicht reflektiert und wieder zurückgeworfen. Auf diese Weise stellt die Fensterabdeckung eine hochwirksame Isolierung sowohl gegen Wärmeabfluß in der kalten Jahreszeit, insbesondere bei Nacht, als auch gegen unerwünschte Raumaufheizung in der warmen Jahreszeit, vor allem bei Sonneneinstrahlung, dar. Zusätzlich wird in der kalten Jahreszeit die Entstehung eines Kälteschleiers verhindert. Mit einer derart ausgerüsteten Fensterabdeckung kann somit das größte thermische »Loch« in einem Raum geschlossen werden, was unter Berücksichtigung steigender Energiekosten von großer Bedeutung ist.

Die vorbeschriebene Fensterabdeckung hat jedoch den Nachteil, daß infolge der durchsichtig ausgebildeten Schutzschichten die Metallschichten deutlich sichtbar sind. Der hierdurch hervorgerufene spiegelnde Glanz ist aber ästhetisch unbefriedigend und stört beim Auftreffen von Lichtstrahlen sehr, da die reflektierenden Strahlen blenden können.

In der CH-A-516 053 ist ein für die Auskleidung insbesondere von Wänden und Decken verwendbares, wärmeisolierendes Material beschrieben, das eine wärmeisolierende Unterlage aus Hartschaumstoff oder verdichtetem Schaumstoff aufweist, auf der eine Trägerfolie aufkaschiert ist. Auf dieser wiederum ist eine IR-reflektierende Metallschicht aufgedampft, die mit einem für Wärmestrahlung durchlässigen, abriebfesten Überzug geschützt ist, der mechanische und chemische Einflüsse von der Metallschicht fernhalten soll. Der Überzug kann auch so ausgebildet sein, daß nur selektive Reflexion an der Metallschicht gegeben ist, indem eine entsprechende Einfärbung vorgenommen wird. Als Voraussetzung hierfür ist angegeben, daß dann die Schichtdicke des Überzugs lediglich ein Viertel der zu reflektierenden Wellenlänge betragen darf.

Das vorbeschriebene wärmereflektierende Material ist für Zwecke bestimmt, bei denen gleichzeitig eine Wärmedämmung und eine Wärmestrahlungsreflexion gefordert ist, da das Material eine isolierende Unterlage hat. An Fensterabdeckungen der eingangs genannten Art war offensichtlich nicht gedacht, da in diesem Bereich eine isolierende Unterlage funktionslos wäre. Davon abgesehen ist zwar auf die Möglichkeit hingewiesen, eine selektive Reflexion bzw. Absorption durch entsprechende Färbung zu erreichen. Um eine solche Wirkung zu erhalten, wird jedoch eine Schichtdicke vorgegeben, die sich praktisch nicht in der dann erforderlichen Gleichmäßigkeit herstellen läßt. Außerdem kann mit einer Schichtdicke, die ein Viertel der Wellenlänge der zu reflektierenden elektromagnetischen Wellen beträgt, eine Selektivität allenfalls in einem sehr engen Wellenlängenbereich erzielt werden, der nur einen kleinen Teil des Wellenlängenbereichs der thermischen IR-Strahlung umfaßt.

Der Erfindung liegt die Aufgabe zugrunde, eine Fensterabdeckung der eingangs genannten Art zu schaffen, deren optisches Aussehen unter Abdeckung der Reflexschicht in weiten Bereichen frei gestaltet werden kann, wobei jedoch die thermische Absorption der jeweiligen Schutzschicht im gesamten Wellenlängenbereich der thermischen IR-Strahlung gering bleiben soll, die thermische Wirkung der Reflexschicht also nicht wesentlich beeinträchtigt wird.

Diese Aufgabe wird erfindungsgemäß dadurch gelöst, daß die Schutzschicht Farbe, insbesondere Farbpigmente in einer Größenverteilung relativ groß im Verhältnis zur Wellenlänge der Strahlung im visuellen Bereich und relativ klein im Verhältnis zur Wellenlänge der Strahlung im IR-Bereich, in einer solchen Anreicherung enthält, daß die jeweilige Reflexschicht nicht mehr sichtbar ist und visuell ein farblicher Eindruck entsteht, jedoch deren Reflexfunktion im thermischen IR-Bereich weitgehend erhalten bleibt.

Es hat sich herausgestellt, daß Schutzschichten, die diesen Bedingungen genügen, in farblicher Hinsicht frei gestaltet werden können, wobei einerseits die Reflexschicht visuell abgedeckt ist, andererseits aber die Absorption in der Schutzschicht im gesamten Wellenlängenbereich der thermischen IR-Strahlung nur sehr gering ist. Diese in farblicher Hinsicht gegebene freie Gestaltbarkeit sichert der erfindungsgemäßen Fensterabdeckung die notwendige Verkaufsfähigkeit, denn diese wird zunächst vom Aussehen der Fensterabdeckung bestimmt. Dabei ist von großem Vorteil, daß trotz dieser Gestaltungsmöglichkeiten die Reflexionswirkung der Reflexschicht im wesentlichen erhalten bleibt. Auf diese Weise ist eine Fensterabdeckung geschaffen, die eine hervorragende Isolierfunktion für Wärmestrahlung hat, der man aber diese Funktion nicht ansieht.

In Ausbildung der Erfindung ist vorgesehen, daß beide Seiten der Trägerschicht mit einer Reflexschicht und einer darauf aufgebrachten Schutzschicht versehen sind. Diese Ausführungsform ist besonders vorteilhaft, da dann auch eine unerwünschte Raumaufheizung in der warmen Jahreszeit, insbesondere durch Sonneneinstrahlung vermieden wird. Zusätzlich wird in der kalten Jahreszeit die Entstehung des Kälteschleiers verhindert.

In weiterer Ausbildung der Erfindung ist vorgesehen, daß die Vorder- und gegebenenfalls Rückseite in ihrem Reflexionsvermögen dem Wellenlängenbereich der jeweils vorherrschenden Temperaturstrahlung angepaßt ist bzw. sind.

Des weiteren ist es im Sinne der Erfindung möglich, die Reflexschicht, erforderlichenfalls im Rapport auf beiden Seiten übereinstimmend, teilweise insbesondere musterförmig auszusparen, um einen verhältnismäßig kleinen Teil des Tageslichtes durch die Fensterabdeckung in die Innenräume gelangen zu lassen und eine Orientierung der Raumbewohner ohne Benutzung der Raumbeleuchtungsanlage zu ermöglichen.

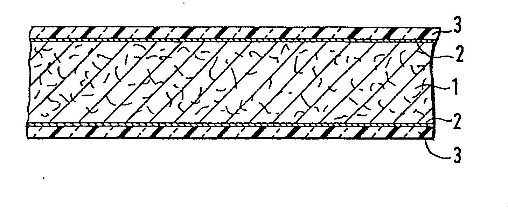

Die Erfindung wird im folgenden näher an Hand eines in der einzigen Zeichnung dargestellten Ausführungsbeispiels erläutert.

Das in der Zeichnung dargestellte, bahnenförmige, aus einem beschichteten, aus Fasern oder dergleichen bestehenden Trägermaterial zur Herstellung von Isolierrollos oder dergleichen ist wie folgt aufgebaut:

Im wesentlichen besteht das Material aus dreierlei gearteten Schichten. Auf eine beidseitig glatte Trägerschicht 1 aus Textil oder Papier wird eine im thermischen IR-Bereich (von 5 bis 25 µm Wellenlänge) hochreflektierende Schicht 2 symmetrisch auf beiden Seiten aufgebracht. Die Wahl des Trägers ist für die vorliegende Erfindung nicht wesentlich. Der Träger 1 hat nur eine mechanische und keine thermisch-isolierende Funktion.

Auf die reflektierende Schicht 2 wird wiederum funktionssymmetrisch auf beiden Seiten eine Farbschicht 3 voll- oder teilflächig, ein- oder mehrfarbig aufgebracht. Diese Schicht ist so ausgeführt, daß die funktionssymmetrische Reflexion der Schicht 2 im thermischen IR-Bereich nicht aufgehoben wird, aber im Bereich von 400 bis 900 nm Wellenlänge beliebige Absorption aufweist, um einen visuell farblichen Eindruck zu erzielen.

Erreicht wird diese Wirkung durch entsprechende Auswahl von Farbträgern oder Bindern und der geometrischen Abmessung der Schichtdicke und Pigmentgröße. Als Bindematerial können hierbei bekannte infrarotdurchlässige Kunststoffmaterialien verwandt werden, wie etwa speziell formuliertes Polyäthylen oder isomerisierter Kautschuk (Cyclokautschuk). Die Größe der in die Bindemittelschicht eingelagerten Pigmente und die Schichtdicke der Bindemittelschicht, d. h. die maximale Zahl von Lagen und Pigmenten in dieser Schicht übereinander, wird so gewählt, daß sich nach dem Mie'schen Streuungsgesetz für Strahlung im optischen Bereich eine diffuse Streuung mit entsprechenden Absorptionsbanden entsprechend der durch die Pigmente bestimmten Farbgebung und im IR-Strahlungsbereich eine gerichtete Streuung für die IR-Strahlung ergibt. Das heißt, es werden Pigmente mit einer Größenverteilung ausgesucht, deren Größe relativ größer als die Wellenlänge der Strahlung im optischen Bereich und relativ klein im Verhältnis zur Wellenlänge der Strahlung im IR-Bereich ist. Weiterhin wird die Schichtdicke möglichst dünn gewählt, so daß nach Möglichkeit lediglich zwei Pigmentlagen in der Schicht vorhanden sind.

In der farblichen Ausgestaltung braucht keine Symmetrie der beiden Seiten angestrebt werden. Für die Funktion des bahnenförmigen Materials zur Herstellung von Isolierrollos oder dergleichen stellt die Farbgebung im Visuellen kein Kriterium dar, sondern öffnet der Erfindung noch einen Freiheitsgrad für die künstlerische Gestaltung ohne die grundsätzliche Funktion einzuschränken.

Für die farbliche Gestaltung wird der Effekt ausgenützt, daß Stoffe auf verschiedenen Wellenlängen des Spektrums verschieden reflektieren, absorbieren oder transmittieren. Die Erfindung ist eine vorzugsweise symmetrisch wirkende Abschirmung im thermischen IR-Bereich ohne die sonst einschränkenden, monoton wirkenden, ästhetisch nicht befriedigenden, metallisch glänzenden Oberflächen.

Erfindungsgemäß wird in einer Ausgestaltung des Materials darauf Rücksicht genommen, daß die Spektralverteilung eines Temperaturstrahlers stark von dessen Temperatur abhängt, indem die Vorder- und ggf. Rückseite für den jeweils relevanten Spektralbereich optimiert wird.

## Patentansprüche

1. Fensterabdeckung, wie Rollo, Jalousie oder dergleichen, aus einem bahnförmigen Material, das aus einer beschichteten, aus Fasern, Folien oder dergleichen bestehenden, lediglich eine mechanische, keine thermisch isolierende Funktion aufweisenden Trägerschicht (1) gefertigt ist, wobei auf zumindest einer der Seiten der Trägerschicht (1) eine IR-reflektierende Reflexschicht (2) aus Metall und darauf eine IR-durchlässige Schutzschicht (3) aus einem Kunststoff, beispielsweise Polyäthylen oder dergleichen, angeordnet und die Schutzschicht(en) (3) so dünn ausgebildet ist bzw. sind, daß ihre thermische Absorption möglichst gering ist, dadurch gekennzeichnet, daß die Schutzschicht(en) (3) Farbe, insbesondere Farbpigmente in einer Größenverteilung relativ groß im Verhältnis zur Wellenlänge der Strahlung im visuellen Bereich und relativ klein im Verhältnis zur Wellenlänge der Strahlung im IR-Bereich, in einer solchen Anreicherung enthält, daß die jeweilige Reflexschicht (2) nicht mehr sichtbar ist und visuell ein farblicher Eindruck entsteht, jedoch deren Reflexfunktion im thermischen IR-Bereich weitgehend erhalten bleibt.

2. Fensterabdeckung nach Anspruch 1, dadurch gekennzeichnet, daß beide Seiten der Trägerschicht (1) mit einer Reflexschicht (2) und einer darauf aufgebrachten Schutzschicht (3) versehen sind.

3. Fensterabdeckung nach Anspruch 1 oder 2, dadurch gekennzeichnet, daß die Vorder- und gegebenenfalls Rückseite in ihrem Reflexionsvermögen dem Wellenlängenbereich der jeweils vorherrschenden Temperaturstrahlung angepaßt ist.

4. Fensterabdeckungen nach einem der Ansprüche 1 bis 3, dadurch gekennzeichnet, daß die Reflexschicht (2), erforderlichenfalls im Rapport auf beiden Seiten übereinstimmend, teilweise insbesondere musterförmig ausgespart ist.

## Claims

1. A window covering, such as a roller blind, Venetian blind or the like, of a material in the form of a web which is made from a coated supporting layer (1) consisting of fibres, foils or the like and only having a mechanical not a thermally insulating function, wherein an IR-reflecting reflex layer (2) of metal is disposed on at least one of the sides of the supporting layer (1) and over that an IR-transmitting protective layer (3) of a plastics material, for example polyethylene or the like, and the protective layer(s) (3) is or are made so thin that their thermal absorption is as low as possible, characterised in that the protective layer(s) (3) contains colouring, particularly colour pigments in a size distribution which is relatively great in relation to the wavelength of the radiation in the visual range and relatively small in relation to the wavelength of the radiation in the IR range, in such a concentration that the particular reflex layer (2) is no longer visible and a coloured impression results visually, but its reflex function in the thermal IR range is largely retained.

2. A window covering as claimed in Claim 1, characterised in that both sides of the supporting layer (1) are provided with a reflex layer (2) and a protective layer (3) applied thereto.

3. A window covering as claimed in Claim 1 or 2, characterised in that the front and possibly the back is adapted in its reflection capacity to the wavelength range of the particular thermactinic radiation prevailing.

4. A window covering as claimed in one of the Claims 1 to 3, characterised in that the reflex layer (2) is partially hollowed out, particularly in the form of a pattern, if necessary being repeated in register on both sides.

## Revendications

1. Dispositif de fermeture de fenêtre, tel que store, jalousie ou autre dispositif semblable, en une matière en forme de bande fabriquée à partir d'une couche support (1) revêtue, en fibres, feuilles ou autres éléments semblables, ayant une fonction simplement mécanique mais pas de fonction isolante du point de vue thermique, une couche réfléchissante en métal (2) réfléchissant le rayonnement infrarouge étant disposée sur au moins l'une des faces de la couche support (1) et une couche de protection (3) en matière plastique, par exemple en polyéthylène ou autre matière semblable transparente au rayonnement infrarouge, étant disposée au-dessus de la couche réfléchissante et la ou les couches de protection (3) est ou sont si minces que leur absorption thermique est aussi petite que possible, caractérisé en ce que la ou les couches de protection (3) contiennent des colorants, notamment des pigments colorés, dont la répartition des dimensions est relativement grande par rapport aux longueurs d'onde du rayonnement dans le domaine visible et relativement petite par rapport aux longueurs d'onde du rayonnement dans le domaine infrarouge, en une teneur telle que la couche réfléchissante (2) ne soit plus visible et qu'il se produise visuellement une impression colorée, mais que sa fonction réfléchissante dans le domaine thermique infrarouge reste maintenue dans une grande mesure.

2. Dispositif de fermeture de fenêtre suivant la revendication 1, caractérisé en ce que les deux faces de la couche support (1) sont munies d'une couche réfléchissante (2) et d'une couche de protection (3) déposée sur celle-ci.

3. Dispositif de fermeture de fenêtre suivant la revendication 1 ou 2, caractérisé en ce que le pouvoir réflecteur de la face antérieure et, le cas échéant, de la face postérieure, est adapté au domaine de longueur d'onde du rayonnement thermique prédominant.

4. Dispositif de fermeture de fenêtre suivant l'une des revendications 1 à 3, caractérisé en ce que la couche réfléchissante (2) est, en cas de besoin, évidée partiellement, notamment suivant la forme d'un modèle, d'une manière en coïncidence sur les deux faces.